# EUROPEAN PATENT APPLICATION

(11) **EP 3 223 146 A1**
(43) Date of publication of application: **27.09.2017**
(21) Application number: 16204131.3
(22) Date of filing: 14.12.2016
(51) Int. Cl.: G06F 9/44

(54) **HMI SYSTEM**

(30) Priority: 25.03.2016 KR 20160036171
(71) Applicant: LSIS Co., Ltd., Gyeonggi-do 14119 (KR)
(72) Inventor: LEE, Seung-Ju, Gyeonggi-do 14118 (KR); KONG, Shin-Jo, Gyeonggi-do 14118 (KR); BAE, Ae-Kyoung, Gyeonggi-do 14118 (KR); YOON, Yeo-Chang, Gyeonggi-do 14118 (KR); YUN, Jang-Hyeok, Gyeonggi-do 14118 (KR); LEE, Seok-Chan, Gyeonggi-do 14118 (KR); WHANG, Ho-Young, Gyeonggi-do 14118 (KR)
(74) Representative: Zacco Sweden AB

(57) **Abstract**

The present disclosure relates to a human machine interface (HMI) system (100) easily applicable to each of a plurality of control management systems. An HMI system (100) according to one embodiment of the present disclosure includes a module generation unit (140) configured to generate an interface module of a control management system selected by an input of a user based on a source code data corresponding to at least one system component, source code data corresponding to each of one or more engineering components, and profile data corresponding to each of a plurality of control management systems. As a result, the HMI system may provide a plurality of interface modules applied to the plurality of control management systems (200-1, 200-2, .., 200-k), and thus there is an advantage in which compatibility may be improved.

## Description

### BACKGROUND

### 1. Technical Field

The present disclosure relates to a human machine interface (HMI) system (hereinafter, referred to as an "HMI system") providing an interface module between a control management system and a user.

### 2. Description of the Related Art

To reduce manufacturing costs and a manufacturing time, most working processes at industrial fields are being changed into automatic equipment that is controlled by a control management system. As such, an application field of automatic equipment is increased, and thus interest is growing on a control management system that provides much more functions.

A conventional control management system includes a supervisory control and data acquisition (SCADA), an industrial control system (ICS), a distributed control system (DCS), a distribution management system (DMS), and the like.

Such a system may be easily controlled by a user through an HMI system.

The HMI system may be referred to as software, which has a function for intuitively displaying data of a control management system to a user and a function for controlling the control management system according to a control instruction being input from the user, and a terminal device provided with the software.

In other words, according to a request from the user, the HMI system receives data representing a status of the control management system, a status of a project being currently processed by the control management system, a status with respect to each of target devices currently operating according to a project, and so on. And, the HMI system converts the received data into numerical values, figures, graphs and the like to provide them to the user.

Further, through the HMI system, the user creates and changes a project using the control management system and target devices being controlled by the control management system. In this case, the HMI system controls the control management system according to the project being created or changed by the user, or a status setting of the control management system.

Meanwhile, a control management system has been developed in various software products according to an application field or a manufacturer, and each product is generally provided in a variety of versions. Conventionally, an HMI system is individually designed so as to provide engineering tools that are dedicated to each control management system.

As a result, there is a problem in that an HMI system being customized and designed for one control management system is difficult to be applied to another control management system. In addition, there is a problem in that a user could not arbitrarily change an HMI system so as to support another control management system. Additionally, there is a problem in that a limitation to reduction of development costs and a development time exist because an HMI system of each of control management systems should be individually developed.

### SUMMARY

An object of the present disclosure is to provide a human machine interface (HMI) system having high compatibility so as to be easily applicable to a plurality of control management systems.

The object of the present disclosure is not limited to the above described object, and other objects and advantages not mentioned above will be understood in the art from the following description and also will be apparently understood by an embodiment of the present disclosure. Also, it will be easily understood that the object and advantages of the present disclosure described herein may be implemented by means and a combination thereof defined by the appended claims.

To attain the object described above, the present disclosure provides a human machine interface (HMI) system including a memory configured to provide source code data corresponding to at least one system component; a first database configured to provide source code data corresponding to each of one or more engineering components; a second database configured to provide profile data corresponding to each of a plurality of control management systems; a module generation unit configured to generate interface modules of control management systems selected by an input of a user among the plurality of control management systems based on the source code data and the profile data; and a module executing unit configured to process data of a single one of the control management systems selected by the input of the user based on an interface module of the single one control management system selected by the input of the user among the generated interface modules.

Here, the module generation unit generates an interface module configured with a combination of the system component and one or more engineering components corresponding to the interface module of the control management system selected by the input of the user based on profile data with respect to the control management system selected by the input of the user.

In accordance with the present disclosure as described above, an HMI system includes a memory providing source code data corresponding to at least one system component so as to display a basic layout of a main frame, a first database providing source code data corresponding to each of one or more engineering components so as to provide control and monitoring functions with respect to a control management system, a second database providing profile data corresponding to each of a plurality of control management systems, and a module generation unit generating an interface module configured with a combination of the system component and one or more engineering components based on profile data.

As described above, the HMI system according to the present disclosure is able to generate all interface modules of a plurality of control management systems by combining a system component with one or more engineering components based on profile data of each of the plurality of control management systems. And, the HMI system is able to selectively execute an interface module corresponding to a control management system selected by a user among the generated interface modules.

In other words, instead of providing an interface module applied to only any one of the plurality of control management systems, the HMI system is able to provide a plurality of interface modules applied to the plurality of control management systems. Therefore, it may be advantageous to improve compatibility of the HMI system.

Additionally, the HMI system according to the present disclosure provides an interface module configured with a combination of a system component and one or more engineering components. Therefore, in the HMI system, it is advantageous to facilitate a change of an interface module such as an addition or elimination of an engineering component as necessary by a user.

### BRIEF DESCRIPTION OF DRAWINGS

FIG. 1 is a block diagram of a human machine interface (HMI) system according to a first embodiment of the present disclosure.
FIG. 2 is a block diagram of a module executing unit of FIG. 1.
FIG. 3 is a flow chart illustrating a process of generating an interface module by the HMI system of FIG. 1.
FIG. 4 is an example of a screen corresponding to a procedure of displaying a listing of control management systems of FIG. 3.
FIG. 5 is an example of a screen corresponding to the process of generating the interface module of FIG. 3.
FIG. 6 is a block diagram of an HMI system according to a second embodiment of the present disclosure.

### DETAILED DESCRIPTION

The above and other objects, features and advantages of the present disclosure will be described later in detail with reference to the accompanying drawings, and thus the technical spirit of the present disclosure can be easily implemented by those skilled in the art. In the following description of the present disclosure, if a detailed description of known configurations and functions is determined to obscure the interpretation of embodiments of the present disclosure, the detailed description thereof will be omitted. Hereinafter, preferred embodiments according to the present disclosure will be described in detail with reference to the accompanying drawings. In the drawings, the same reference numerals refer to the same or similar elements throughout.

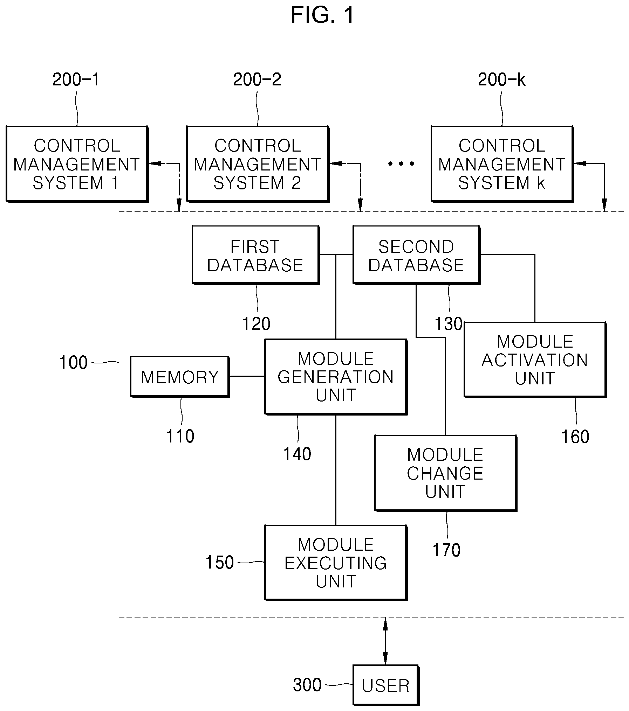

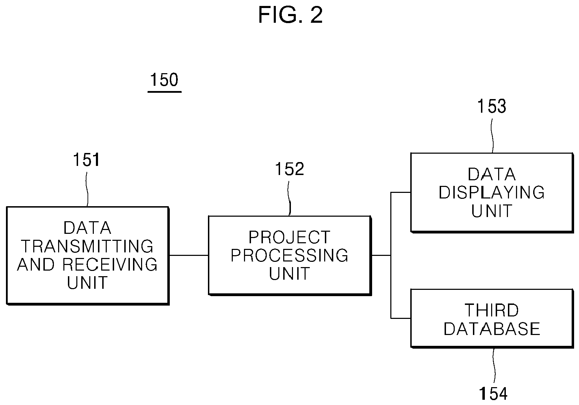

FIG. 1 is a block diagram of a human machine interface (HMI) system according to a first embodiment of the present disclosure, and FIG. 2 is a block diagram of a module executing unit of FIG. 1.

As shown in FIG. 1, an HMI system 100 according to a first embodiment of the present disclosure provides an interface module between a single system, which is selected by an input of a user 300, among a plurality of control management systems 200-1, 200-2, ..., and 200-k (hereinafter, referred to as a reference numeral "200") and the user 300.

For reference, although not being shown in detail in FIG. 1, the control management system 200 may be connected to a measuring instrument and a controller which are included in an automatic target process, and may include at least one programmable logic controller (PLC) for executing the measuring instrument and the controller.

The HMI system 100 receives status data from the control management system 200 and processes the status data to display it on a screen through a graphic means or a character means. With such an operation, the user 300 may easily monitor the control management system 200 through the HMI system 100.

And, the user 300 may easily create or change a project, which designs a series of processes to be performed by the control management system 200, using the HMI system 100. In this case, the HMI system 100 controls the control management system 200 based on a project being input. In other words, the user 300 may easily control the control management system 200 through the HMI system 100.

In particular, the HMI system 100 includes a memory 110 providing source code data corresponding to at least one system component so as to display a basic layout of a main frame, a first database 120 providing source code data corresponding to each of one or more engineering components so as to serve to control and monitor a control management system, a second database 130 providing profile data corresponding to each of a plurality of control management systems, a module generation unit 140 generating an interface module of a control management system being selected by an input of the user 300 among the plurality of control management systems, and a module executing unit 150 processing data of one control management system being selected by an input of the user 300 based on an interface module of the selected control management system.

The HMI system 100 may further include a module activation unit 160 selectively activating or inactivating a generated interface module.

Also, the HMI system 100 may further include a module change unit 170 adding or deleting an engineering component being selected by an input of the user 300 in a generated interface module.

The memory 110 provides at least one system component related to a basic layout of a main frame. In FIG. 1, the memory 110 is shown as a separate configuration from the module generation unit 140, but the memory 110 may be a configuration being included in the module generation unit 140.

Illustratively, at least one system component may serve to provide an initial screen that includes options such as a menu, a toolbar, an engineering browser, a point browser, a cross reference, an output/log, an image file viewer for MDI (Multiple Document Interface) file and so on.

The first database 120 provides source code data of one or more engineering components. Here, one or more engineering components correspond to a function of an interface module for controlling and monitoring the control management system 200.

Illustratively, one or more engineering components may be functions related to a layout of the interface module. In this case, one or more engineering components may include dynamic-link library (DLL) with respect to a menu service, a toolbar service, a tree service, a command, a data process such as a loading, a storing, and a reloading of data, a multi-language service, an output window service, a point browser service, a view management service, and the like.

And, one or more engineering components may be functions that are actually used for controlling and monitoring with respect to the control management system 200. In this case, one or more engineering components may further include a dynamic-link library with respect to a project circumstance setting, a user and group defining, a graphic editor, a database (DB) editor, an operation expression/automatic control editor, a trend registering and editing, an office procedure automation system (OPAS), an operation group editing, a working environment setting, and the like.

The second database 130 provides profile data of each of the plurality of control management systems 200.

Illustratively, profile data of each of the control management systems 200-1, 200-2, ..., and 200-k, which is provided from the second database 130, may include data regarding a product name, a manufacturer, a version, a project framework being provided of each of the control management systems 200-1, 200-2, ..., and 200-k.

In particular, the profile data of each of the control management systems 200-1, 200-2, ..., and 200-k includes data regarding a generation status of an interface module of each of the control management systems 200-1, 200-2, ..., and 200-k, a listing with respect to one or more engineering components corresponding to each of the control management systems 200-1, 200-2, ..., and 200-k, and a method for applying each of the one or more engineering components to a basic layout.

The module generation unit 140 individually generates an interface module of a control management system 200 being selected by the user 300 based on the source code data and the profile data provided from the memory 110 and the first and second databases 120 and 130.

In other words, the module generation unit 140 requests profile data with respect to the selected control management system 200 to the second database 130. And, the module generation unit 140 requests source code data with respect to one or more engineering components, which are included in a listing of the profile data, to the first database 120.

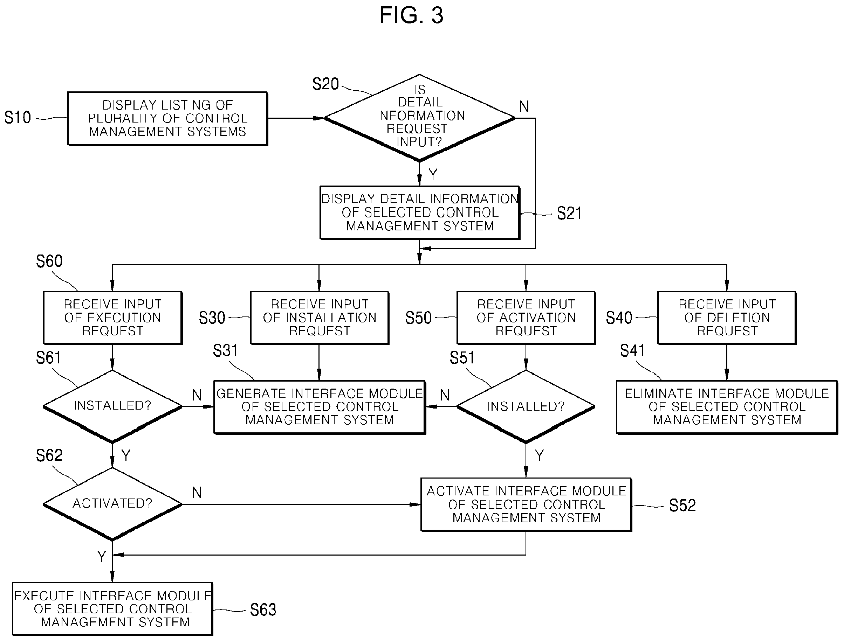

Thereafter, the module generation unit 140 combines the one or more engineering components with the basic layout being provided from the memory 110 based on a method for applying a component, which is included in the profile data. As a result, the interface module of the selected control management system 200 may be generated by a combination of the basic layout and the one or more engineering components. Such a process of generating an interface module by the module generation unit 140 will be described in more detail below with reference to examples of FIGS. 3 to 5.

With such a memory 110, the first and second databases 120 and 130, and the module generation unit 140, there is an advantage in which an interface module dedicated to each of the plurality of control management systems 200 may be provided without a separate process of developing a module and a separate process of changing a device connection.

The module executing unit 150 processes data of any one control management system 200 being selected by a user based on an interface module of the any one control management system 200, which is selected by the user so as to control or monitor it, among the generated interface modules. In other words, the module executing unit 150 executes the interface module selected by the user, thereby assisting the user to monitor or control the selected control management system 200.

Illustratively, as shown in FIG. 2, the module executing unit 150 may include a data transmitting and receiving unit 151, a project processing unit 152, a data displaying unit 153, and a third database 154.

The data transmitting and receiving unit 151 receives status data from the control management system 200 shown in FIG. 1, or transmits control data thereto.

The project processing unit 152 performs a setting and a screen work required for monitoring and controlling the control management system 200. In other words, the project processing unit 152 provides a tool related to a making of a project that will be performed through the control management system 200, and changes a performing result of the project into a means capable of intuitively displaying the performing result of the project to a user. Illustratively, the project processing unit 152 may provide a graphic runtime engine so as to a performing progress of the project.

The third database 154 stores a project generated according to an executing of an interface module, a performing result of the project, and the like.

Referring back to FIG. 1, the description will be resumed.

The module activation unit 160 selectively activates some interface modules being selected as it will be used or it is currently used by the user 300 among generated interface modules. At this point, the module activation unit 160 inactivates the remaining interface modules except the activated some interface modules. With such a module activation unit 160, it may be possible to prevent a resource of equipment installed with the HMI system 100 from unnecessarily being wasted.

The module change unit 170 adds an engineering component being selected by the user 300 to an interface module being selected by the user 300, or deletes the engineering component therefrom.

That is, as described above, the HMI system 100 according to the first embodiment of the present disclosure provides an interface module configured with one or more engineering components. Consequently, it may be easily performed as necessary by a user such that an engineering component, which is not included in the profile data of the control management system 200, is added to an interface module, and an engineering component, which is unnecessary to the user, is eliminated from an interface module.

In other words, under a condition that mutual interference or mutual collision between engineering components does not occur, the module change unit 170 may change an interface module different from profile data of the control management system 200 by adding or eliminating an engineering component. As a result, there are advantages in which practicality and compatibility of the HMI system 100 may be more improved.

Hereinafter, a process of generating an interface module by the HMI system 100 according to the first embodiment of the present disclosure will be described with reference to examples shown in FIGS. 3 to 5.

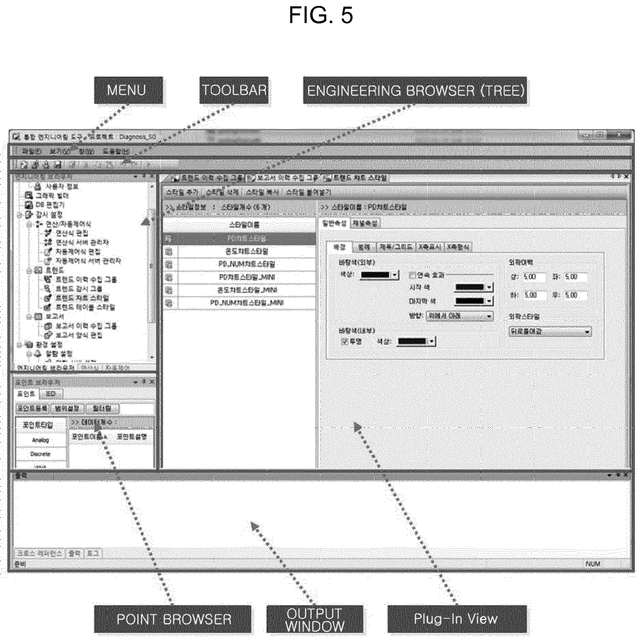

FIG. 3 is a flow chart illustrating a process of generating an interface module by the HMI system of FIG. 1. FIG. 5 is an example of a screen corresponding to the process of generating an interface module of FIG. 3.

As shown in FIG. 3, before generating an interface module, the module generation unit 140 of the HMI system 100 shown in FIG. 2 firstly displays a listing of a plurality of control management systems which can be controlled and monitored by an interface module being provided from the HMI system 100 in Operation S10. At this point, the module generation unit 140 displays the listing of the plurality of control management systems based on source code data of a system component and profile data of the plurality of control management systems, wherein the source code data is provided from the memory 110 shown in FIG. 1 and the profile data is provided from the second database 130 shown in FIG. 1.

And, in Operation S10 of displaying the listing of the plurality of control management systems, the module generation unit 140 may further display whether or not an interface module of each of the plurality of control management systems is generated.

At this point, when receiving an input for requesting detail information with respect to a control management system selected by a user in Operation S20, the module generation unit 140 displays the detail information of the control management system selected by the user based on profile data of the selected control management system in Operation S21.

Also, when receiving an input for requesting the installation of an interface module corresponding to a control management system selected by the user in Operation S30, the module generation unit 140 shown in FIG. 1 generates an interface module of the selected control management system by combining a system component with one or more engineering components based on the source code data and the profile data which are provided from the memory 110 and the first and second databases 120 and 130 in Operation S31.

In addition, when receiving an input for requesting the elimination of an interface module corresponding to a control management system selected by the user in Operation S40, the module generation unit 140 eliminates the interface module and data related thereto which are stored in the third database 154 shown in FIG. 2 in Operation S42.

Additionally, when receiving an input for requesting the activation of an interface module corresponding to a control management system selected by the user in OperationS50, the module activation unit 160 shown in FIG. 1 firstly verifies whether or not the selected interface module is generated in Operation S51. At this point, when the selected interface module is not generated, the module activation unit 160 requests generation of the selected interface module to the module generation unit 140 in Operation S31. Thereafter, the module activation unit 160 processes to activate the interface module selected by the user among interface modules being generated in Operation S52.

Further, when receiving an input for requesting the performance of an interface module corresponding to a control management system selected by the user in Operation S60, the module executing unit 150 firstly verifies whether or not the interface module is generated and activated based on the profile data from the second database 130 in Operations S61 and S62. Otherwise, the module executing unit 150 may verify whether or not the selected interface module is generated and activated by considering the third database 154 shown in FIG. 2.

When the selected interface module is not generated, the module executing unit 150 requests the module generation unit 140 to generate the selected interface module in Operation S31. And, when the selected interface module is not activated, the module executing unit 150 requests the module activation unit 160 to activate the selected interface module in Operation S52.

Thereafter, when the selected interface module has been generated and activated, the module executing unit 150 executes with the selected interface module. As a result, the module executing unit 150 may provide a function for monitoring and controlling a control management system based on the selected interface module in Operation S63.

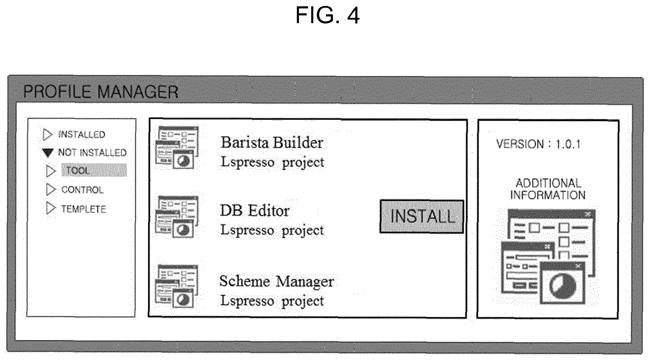

As illustratively shown in FIG. 4, when a user accesses to the HMI system 100, a listing regarding a plurality of control management systems, which can be controlled and monitored by the HMI system 100, is displayed. At this point, a status, which represents whether an interface module of each of the plurality of control management systems has been installed or is required to be installed, may be displayed together. And, when the user selects a specific control management system through an input of a click or a double-click, detail information of the specific control management system, that is, a manufacturer, a version and so on may be further displayed on a detail information window.

In addition, as shown in FIG. 4, the HMI system 100 displays a main frame having a layout that is implemented by a system component provided from the memory 110. Illustratively, the main frame may include functions a menu, a toolbar, an engineering browser, a point browser, an output window, a plug-in view, and the like.

Additionally, the HMI system 100 provides an interface module including detailing tools of each function by combining a system component with at least portion of engineering components provided from the first database 120.

Meanwhile, the HMI system 100 according to the first embodiment of the present disclosure may be implemented by software installed at a terminal (not shown) of a user.

Otherwise, the HMI system 100 may be implemented such that a portion including at least module executing unit of the HMI system 100 is installed at a terminal (not shown) of a user, and the remaining portion is installed at a cloud system.

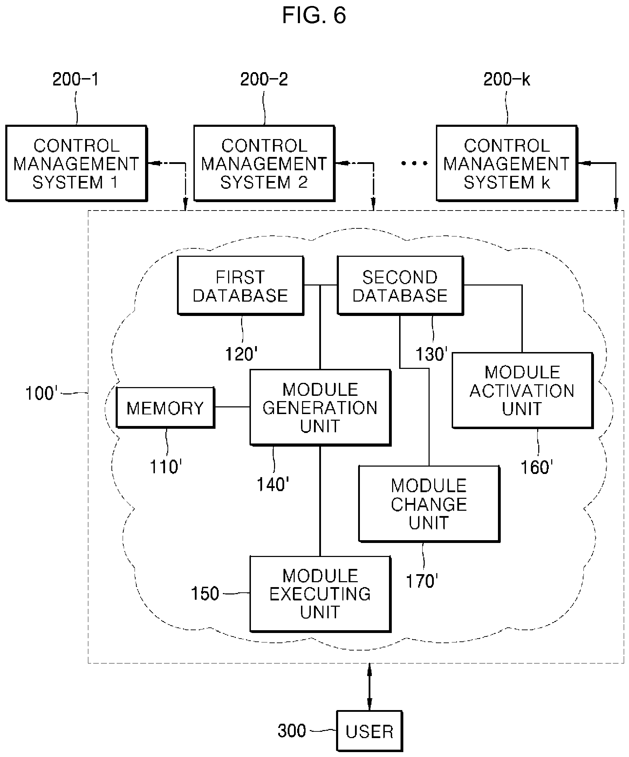

FIG. 6 is a block diagram of an HMI system according to a second embodiment of the present disclosure.

As shown in FIG. 6, an HMI system 100' according to a second embodiment of the present disclosure may be implemented such that components except a module executing unit 150, which actually executes an interface module, are installed at a cloud system. That is, in the HMI system 100', a memory 110', first and second databases 120' and 130', a module generation unit 140', a module activation unit 160', and a module change unit 170' are installed at a cloud system. And, the module executing unit 150 installed at a terminal of a user may receive an interface module being generated and activated from a cloud system.

With such a configuration, a resource being requested at a terminal of a user may be reduced, and thus convenience of the user may be more improved.

Although the present disclosure has been described with reference to the embodiments, it should be understood that numerous other substitutions, modifications and alterations can be devised by those skilled in the art without departing the technical spirit of this disclosure, and thus it should be construed that the present disclosure is not limited by the embodiments described above and the accompanying drawings.

## Claims

1. A human machine interface, HMI, system (100), which provides an interface module between any one control management system and a user, the HMI system comprising:
a memory (110) configured to provide source code data corresponding to each of at least one system component;
a first database (120) configured to provide source code data corresponding to each of one or more engineering components;
a second database (130) configured to provide profile data corresponding to each of a plurality of control management systems;
a module generation unit (140) configured to generate interface modules of control management systems selected by an input of a user among the plurality of control management systems, based on the source code data and the profile data; and
a module executing unit (150) configured to process data of a single one of the control management systems selected by the input of the user among the generated interface modules, based on an interface module of the selected single one control management system.

2. The HMI system of claim 1, wherein the profile data of each of the plurality of control management systems, which is provided from the second database (120), includes data with respect to whether or not the interface module of each of plurality of control management systems is generated, a listing of one or more engineering components corresponding to the interface module of each of plurality of control management systems, and a method of combining the at least one system component with each of the one or more engineering components.

3. The HMI system of claim 2, wherein the module generation unit (140) generates an interface module configured with a combination of the system component and the one or more engineering components corresponding to the interface module of the selected single one control management system, based on profile data with respect to the selected single one control management system.

4. The HMI system of claim 2, further comprising:
a module activation unit (160) configured to activate the interface module of the control management system selected by the input of the user among the generated interface modules,
wherein the profile data of each of the plurality of control management systems, which is provided from the second database (130), further includes data with respect to whether or not the interface module of each of the plurality of control management systems is activated, and
wherein the interface module of the selected single one control management system, which is used by the module executing unit (150) for processing data of the selected single one control management system, is selected by the input of the user among the interface modules which are generated and activated.

5. The HMI system of claim 1, wherein the at least one system component corresponds to a function for displaying a basic layout of a mainframe.

6. The HMI system of claim 1, wherein each of the one or more engineering components corresponds to a function for assisting a control and a monitoring with respect to each of the plurality of control management systems.

7. The HMI system of claim 1, further comprising:
a module change unit (170) configured to add an engineering component, which is selected by an input of the user, to the interface module of the selected single one control management system, or delete the engineering component, which is selected by the input of the user, from the interface module of the selected single one control management system, based on the input of the user and the source code data.

8. The HMI system of claim 1, wherein the HMI system is installed at a terminal of the user.

9. The HMI system of claim 1, wherein the first database (120'), the second database (130'), and the module generation unit (140') are at least installed at a cloud system.
